# EUROPÄISCHE PATENTANMELDUNG

(11) **EP 4 617 621 A1**
(43) Veröffentlichungstag der Anmeldung: **17.09.2025**
(21) Anmeldenummer: 25162756.8
(22) Anmeldetag: 10.03.2025
(51) Int. Cl.: G01B 13/00, B65H 23/02

(54) **MESSKOPF, KANTENSENSOR SOWIE ANLAGE**

(30) Priorität: 12.03.2024 DE 102024107021
(71) Anmelder: Brückner Maschinenbau GmbH, 83313 Siegsdorf (DE)
(72) Erfinder: Sollacher, Florian, 83346 Bergen (DE); Rott, Thomas, 83313 Siegsdorf (DE); Höglauer, Christoph, 83329 Waging am See (DE)
(74) Vertreter: Flach Bauer & Partner Patentanwälte mbB

(57) **Zusammenfassung**

Ein Messkopf (32) für einen pneumatischen Kantensensor (28) zur Erkennung der Lage einer Kante (K) einer Materialbahn (B), insbesondere einer Folienbahn, hat ein Kopfteil (38) und eine Messzone (40). Sowohl der erste Abschnitt (42) als auch der zweite Abschnitt (44) weisen einen Fluidanschluss (46), Kanäle (48) und eine Messfläche (50) mit Öffnungen (54) auf, wobei die Messflächen (50) des ersten Abschnitts (42) und des zweiten Abschnitts (44) die Messzone (40) begrenzen. Die Messzone (40) ist mit dem Fluidanschluss (46) des ersten Abschnitts (42) und des zweiten Abschnitts (44) mittels je einer fluidischen Verbindung verbunden, wobei die fluidische Verbindung zumindest teilweise durch die Öffnungen (54) und die Kanäle (48) des jeweiligen Abschnitts (42, 44) realisiert ist.

Zudem sind ein Kantensensor (28) und eine Anlage (10) gezeigt.

## Beschreibung

Die Erfindung betrifft einen Messkopf für einen pneumatischen Kantensensor, einen pneumatischen Kantensensor sowie eine Anlage zur Herstellung einer Materialbahn.

Anlagen zur Herstellung einer Materialbahn sind bekannt und führen während des Betriebs eine Materialbahn. Hierzu sind verschiedene Führungsvorrichtungen bekannt, die die Kante der Materialbahn greifen und bewegen können.

Die Lage der Materialbahn und damit die Lage der Kanten verändert sich während des Betriebs jedoch permanent, sodass es notwendig ist, die Lage der Kanten permanent zu messen.

Hierzu sind pneumatische Kantensensoren bekannt, die mittels eines Messkopfes eine Messzone bereitstellen, in der die Kante verläuft.

Auf der einen Seite der Messzone bzw. der Materialbahn, beispielsweise der Oberseite, wird Druckluft in die Messzone eingebracht und der Druck auf der anderen Seite der Messzone, d.h. auf der anderen Seite der Materialbahn, wird gemessen. Bei bekannten Messköpfen kann jedoch nur ein Teil der Messzone tatsächlich verwendet werden und eine präzise Bestimmung der Lage ist schwierig, da sich der gemessene Druck nicht linear mit der Lage der Kante verändert.

Es ist daher Aufgabe der Erfindung, einen Messkopf, einen Kantensensor sowie eine Anlage bereitzustellen, mittels denen die Lage der Kante an der Materialbahn besonders präzise ermittelt werden kann.

Die Aufgabe wird gelöst durch einen Messkopf für einen pneumatischen Kantensensor zur Erkennung der Lage einer Kante einer Materialbahn, insbesondere einer Folienbahn, mit einem Kopfteil und einer Messzone. Das Kopfteil weist einen ersten Abschnitt und einen zweiten Abschnitt auf, wobei die Messzone zwischen dem ersten Abschnitt und dem zweiten Abschnitt angeordnet ist. Sowohl der erste Abschnitt als auch der zweite Abschnitt weisen einen Fluidanschluss, eine Vielzahl von Kanälen und eine Messfläche mit Öffnungen auf. Die Messflächen des ersten Abschnitts und des zweiten Abschnitts begrenzen die Messzone, wobei die Messzone mit dem Fluidanschluss des ersten Abschnitts mittels einer fluidischen Verbindung durch den ersten Abschnitt verbunden ist. Die fluidische Verbindung ist zumindest teilweise durch die Öffnungen und die Kanäle des ersten Abschnitts realisiert. Die Messzone ist mit dem Fluidanschluss des zweiten Abschnitts mittels einer fluidischen Verbindung durch den zweiten Abschnitt verbunden, wobei die fluidische Verbindung zumindest teilweise durch die Öffnungen und Kanäle des zweiten Abschnitts realisiert ist.

Durch die Verwendung einer Vielzahl von Kanälen und entsprechenden Öffnungen in der Messfläche wird gezielt über einen großen Bereich der Messzone Druckluft in die Messzone eingebracht bzw. Luft entnommen. Zugleich wird durch die Öffnungen und Kanäle erreicht, dass eine besonders homogene Strömung durch die Messzone ausgebildet wird.

Auf diese Weise wird ein großer Bereich der Messzone für eine Messung verfügbar, sodass ein großer räumlicher Messbereich für die Lage der Kante zur Verfügung steht. Gleichzeitig wird die Linearität des Druckabfalls, der mit der Veränderung der Lage der Kante einhergeht, verbessert, wodurch deutlich präzisere Messungen möglich sind.

Die Materialbahn kann eine Kunststofffolie, eine Papierbahn, eine Textilbahn oder eine Bahn aus einem anderen Gewirk oder Material, das verstreckt werden kann, sein.

Beispielsweise verlaufen die fluidischen Verbindungen vollständig innerhalb des jeweiligen Abschnitts, wobei jeder der Kanäle in je einer der Öffnungen der Messfläche des entsprechenden Abschnitts mündet.

Die Kanäle können sich zu den Öffnungen hin verjüngen, insbesondere können die Kanäle an ihrem dem Fluidanschluss zugewandten Ende eine größere Öffnungsweite aufweisen als an den Öffnungen. Auf diese Weise werden die Strömungseigenschaften weiter verbessert.

In einer Ausgestaltung verlaufen die Kanäle zumindest teilweise in einem Bogen, insbesondere der sich über einen Winkel zwischen 80° und 100°, insbesondere über 90° erstreckt, sodass Turbulenzen, die die Qualität der Messung beeinträchtigen würden, auch bei gewinkelter fluidischer Verbindung zuverlässig vermieden werden.

Um Turbulenzen weiter zu verringern und so die Qualität der Messung weiter zu verbessern, können die Kanäle eine Länge von mehr als 5 mm, insbesondere von mehr als 10 mm aufweisen, und/oder eine Länge aufweisen, die größer als die dreifache Öffnungsweite einer der Öffnungen ist.

In einem Aspekt ist die Öffnungsrichtung des Fluidanschlusses des ersten Abschnitts und/oder des zweiten Abschnitts gewinkelt, insbesondere senkrecht zur Öffnungsrichtung der Öffnungen der Messfläche des ersten Abschnitts und/oder des zweiten Abschnitts. Auf diese Weise lässt sich der Messkopf einfach anschließen.

Die Öffnungsrichtung des Fluidanschlusses kann sich in Längsrichtung, Querrichtung oder Hochrichtung erstrecken.

Beispielsweise erstrecken sich die Öffnungsrichtungen des Fluidanschlusses des ersten Abschnitts und des zweiten Abschnitts parallel zueinander.

In einer Ausführungsform liegen die Messfläche des ersten Abschnitts und die Messfläche des zweiten Abschnitts einander gegenüber, insbesondere sind sie parallel zueinander. Auf diese Weise wird eine geradlinige Strömung durch die Messzone ermöglicht, die die Qualität der Messung weiter verbessert.

Für eine besonders gradlinige Strömung kann die Messfläche eben sein und/oder nur an einer Seite des entsprechenden Abschnitts vorgesehen sein.

In einer Ausgestaltung sind die Messflächen des ersten Abschnitts und des zweiten Abschnitts in Hochrichtung des Messkopfes voneinander beabstandet. Die Öffnungen der Messfläche des ersten Abschnitts und/oder der Messfläche des zweiten Abschnitts sind in Längsrichtung und/oder in Querrichtung nebeneinander angeordnet, wodurch eine besonders gleichmäßige Strömung erreicht wird.

Beispielsweise sind die Öffnungen der Messfläche des ersten Abschnitts und/oder der Messfläche des zweiten Abschnitts in wenigstens einer Reihe angeordnet, die sich insbesondere in Längsrichtung erstreckt. Dadurch wird der Messbereich, insbesondere in Längsrichtung, gleichmäßig durchströmt, wodurch die Linearität der Messung weiter vergrößert wird.

In einer Ausgestaltung sind wenigstens zwei Reihen von Öffnungen vorgesehen, die in Querrichtung nebeneinander angeordnet sind, insbesondere wobei die Öffnungen ein regelmäßiges Gitter bilden. Durch die Verwendung mehrerer Reihen kann die Messgenauigkeit weiter erhöht werden.

Beispielsweise sind die Öffnungen zweier benachbarter Reihen zueinander versetzt, um die Messzone möglichst vollständig zu überdecken.

Zum Beispiel sind zwei Reihen mit jeweils fünf Öffnungen auf jeder der Messflächen vorgesehen. Denkbar sind auch mehr oder weniger als zwei Reihen mit mehr oder weniger als jeweils fünf Öffnungen.

In einem Aspekt fluchten die Öffnungen der Messfläche des ersten Abschnitts und die gegenüberliegende Öffnung der Messfläche des zweiten Abschnitts miteinander, um Turbulenzen weiter zu verringern und damit die Qualität der Messung weiter zu erhöhen.

In einer Ausführungsform sind der erste Abschnitt und der zweite Abschnitt zusammen einstückig ausgeführt, insbesondere wobei der gesamte Messkopf einstückig ist. Dadurch können die Öffnungen der Messflächen ohne Justieraufwand präzise zueinander ausgerichtet sein.

Das Kopfteil ist beispielsweise aus einem Kunststoff und zum Beispiel mittels eines additiven Fertigungsverfahrens, wie 3D-Druck hergestellt. Zur Herstellung mittels 3D-Druck eignet sich zum Beispiel Polyamid 12 (PA12) als Material und/oder Multi Jet Fusion als Herstellungsverfahren.

Denkbar ist auch der Einsatz von Polyetheretherketon (PEEK), Polyetherketonketon (PEKK), Aluminium oder Stahl für die Herstellung des Kopfteils mittels 3D-Druck. Auch andere Materialien, die bei Temperaturen über 80°C formbeständig sind, können verwendet werden.

Ebenso ist die Verwendung von Stereolithografieverfahren (SLA) oder selektivem Lasersintern (SLS) denkbar.

Beispielsweise weist das Kopfteil, in Seitenansicht in Querrichtung betrachtet, eine C-Form auf. Denkbar ist auch eine andere Form des Kopfteils, sofern eine Kante einer Materialbahn zwischen zwei Abschnitten dieser Form geführt werden kann.

In einer Ausgestaltung ist im ersten Abschnitt und/oder im zweiten Abschnitt eine Übergangskavität angeordnet, in die der Fluidanschluss und die Kanäle des jeweiligen Abschnitts münden, insbesondere wobei der Fluidanschluss und die Kanäle an entgegengesetzten Seiten in die Übergangskavität münden. Durch die Übergangskavität kann der Druckluftstrom auf alle Kanäle gleichmäßig verteilt werden bzw. aus allen Kanälen ohne Beeinflussung der Kanäle untereinander vereint werden.

Insbesondere besteht die fluidische Verbindung aus der Übergangskavität und den Kanälen.

Die Aufgabe wird ferner gelöst durch einen Kantensensor zur Erkennung der Lage einer Kante einer Materialbahn, insbesondere einer Folienbahn. Der Kantensensor hat einen Messkopf wie zuvor beschrieben, eine Druckluftquelle und einen Drucksensor, wobei die Druckluftquelle und der Drucksensor mit verschiedenen der Fluidanschlüsse des Messkopfes fluidisch verbunden sind.

Die zum Messkopf beschriebenen Merkmale und Vorteile gelten gleichermaßen für den Kantensensor und umgekehrt.

Die fluidische Verbindung erfolgt beispielsweise mittels Leitungen, wie Rohren und/oder Schläuchen.

Ferner wird die Aufgabe gelöst durch eine Anlage zur Herstellung einer Materialbahn, insbesondere einer Folienherstellungsanlage, mit einem Kantensensor wie zuvor beschrieben, insbesondere wobei sich die Materialbahn durch die Messzone erstreckt.

Die zum Messkopf und/oder Kantensensor beschriebenen Merkmale und Vorteile gelten gleichermaßen für die Anlage und umgekehrt.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1: eine schematische Ansicht einer Anlage gemäß einer Ausführungsform der Erfindung mit einem Kantensensor gemäß einer Ausführungsform der Erfindung mit einem Messkopf gemäß einer Ausführungsform der Erfindung,
- Fig. 2: eine schematische Ansicht eines Eingangsbereichs eines Ofens der Anlage gemäß Figur 1 mit Kantensensoren, und
- Figs. 3, 4: einen Messkopf der Kantensensoren gemäß Figur 2 in perspektivischer Ansicht bzw. in Schnittansicht.

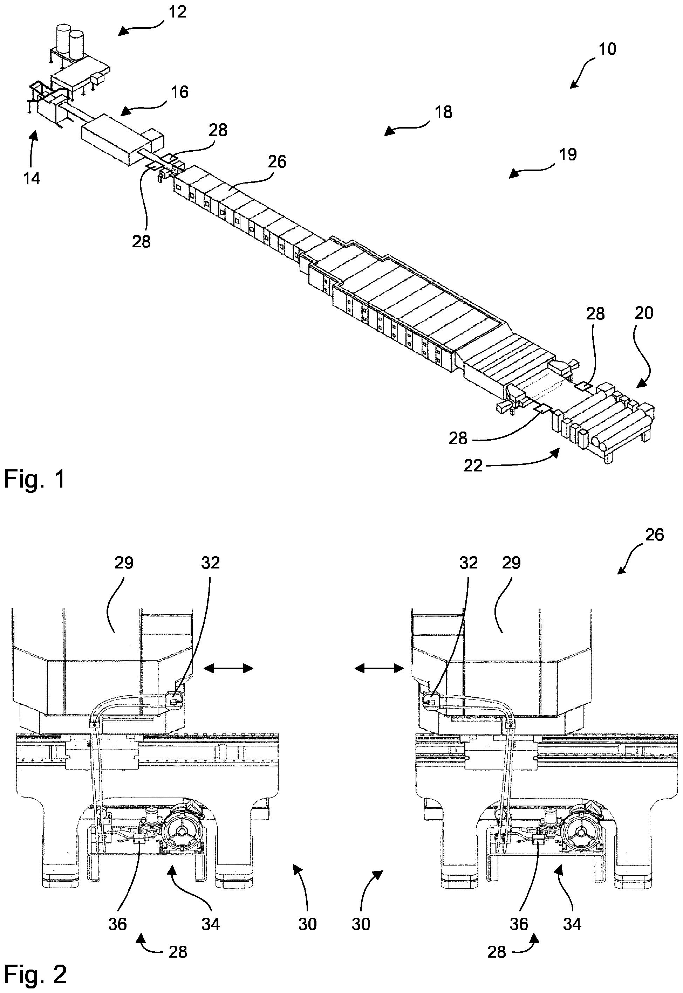

In Figur 1 ist äußerst schematisch eine Anlage 10 zur Herstellung einer Materialbahn B dargestellt, die mehrere verschiedene Anlagen und Vorrichtungen umfasst.

Im gezeigten Beispiel ist die Anlage 10 eine Folienherstellungsanlage, anhand der - ohne Beschränkung des Schutzbereichs - die Erfindung beispielhaft erläutert wird.

In diesem Fall ist die Materialbahn B eine Kunststofffolie. Denkbar ist auch, dass die Materialbahn B eine Papierbahn, eine Textilbahn oder eine Bahn aus einem anderen Gewirk oder Material ist, das verstreckt werden kann.

Im gezeigten Beispiel weist die Anlage 10 eine Extrusionsanlage 12, eine Gießwalzenanlage 14, zumindest eine Reckanlage - wie eine Längsreckanlage 16 (MDO, "Machine Direction Orienter") oder eine Querreckanlage 18 (TDO, "Transverse Direction Orienter") - eine Zugrollenanlage und/oder Randbehandlungseinrichtung 20 sowie eine Wickleranlage 22 auf.

Die hergestellte Folie ist beispielsweise eine biaxial verstreckte Folie, wie Polypropylenfolie (BO-PP), Polyethylenterephthalatfolie (BO-PET), Polyamidfolie (BOPA), Polyethylenfolie (BO-PE), Polyactidfolie (BO-PLA), Kondensatorfolie (BOPP-C) oder Batterieseparatorfolie (BSF).

Zur Herstellung der Kunststofffolie wird mittels der Extrusionsanlage 12 ein Film auf der Kühlwalze einer Gießwalzenanlage 14 erzeugt. Hierzu erzeugt die Extrusionsanlage 12 aus Ausgangsprodukten, wie Granulaten, eine Schmelze, die auf die Kühlwalze aufgetragen wird, wodurch der Film erzeugt wird.

Dieser Film wird als Materialbahn B von der Gießwalzenanlage 14 zur Längsreckanlage 16 gefördert. In der Längsreckanlage 16 wird der Film in Längsrichtung gereckt, um eine Folie zu erhalten.

In der Längsreckanlage 16 läuft der Film über eine Vielzahl an Rollen, die beheizt sind, um den Film auf die gewünschte Temperatur zu bringen, um ihn verstrecken zu können.

Zwischen mindestens zwei der in der Längsreckanlage 16 vorhandenen Rollen findet die Reckung in Längsrichtung, d. h. in Abzugsrichtung, statt, sodass aus dem Film eine Folie wird.

Die erhaltene Folie wird von der Längsreckanlage 16 zur Querreckanlage 18 gefördert und in der Querreckanlage 18 in Querrichtung gereckt.

Die Querreckanlage 18 hat entlang der Abzugsrichtung der Anlage 10 einen Ofen 26 mit verschiedenen Zonen zur Behandlung der Folie.

In der ersten Zone, auch Vorheizzone genannt, wird die Folie erwärmt. In der anschließenden zweiten Zone ("Reckzone") wird die Folie in Querrichtung gereckt, sodass sie zum Ende der zweiten Zone eine größere Breite und geringere Dicke aufweist als zu Beginn.

Nach erfolgter Reckung durchläuft die Folie dann die dritte und weitere Zonen ("Wärmebehandlungszone", "Weiterheizzone" und/oder "Annealingzone" genannt), bei der beispielsweise eine Relaxierung der Folie bei hohen Temperaturen erfolgen kann.

Anschließend verläuft die Folie durch eine weitere Zone ("Kühlzone"), wobei die Folie in der letzten Zone abgekühlt wird.

Eine weitere Zone wird Neutralzone genannt und dient zur Trennung von Zonen. Die Neutralzone ist beispielsweise ein leerer Raum ohne Belüftung.

Die Zonen der Querreckanlagen 18 können auch anders aufgeteilt sein und/oder in ihrer Länge anders ausgeführt sein. Zum Beispiel können weniger oder kürzere Neutralzonen vorgesehen sein oder die Neutralzonen können an anderen Stellen, auch zusätzlich, angeordnet sein. Auch Änderungen an den übrigen Zonen sind denkbar.

Nach der Querreckanlage 18 verläuft die nun biaxial gereckte Folie durch die Zugrollenanlage und/oder Randbehandlungseinrichtung 20 und wird mittels der Wickleranlage 22 aufgewickelt.

Denkbar ist auch, dass die Anlage 10 auf andere Weise ausgebildet ist, beispielsweise als Reckanlage alternativ oder zusätzlich zur Längsreckanlage 16 und/oder zur Querreckanlage 18 eine Simultanreckanlage 19 mit einem Ofen 26 aufweist.

Um die Materialbahn B in der Anlage 10 gezielt führen zu können, weist die Anlage 10 mehrere Kantensensoren 28 auf.

Diese können an verschiedenen Stellen der Anlage 10 angeordnet sein, um an diesen Stellen die Lage der Kante der Materialbahn B genau zu bestimmen. Dies ist beispielsweise beim Aufwickeln der Materialbahn B an der Wickleranlage 22 oder beim Einfahren in den Ofen 26 der Querreckanlage 18 von Bedeutung. Auch für die Randbehandlungseinrichtung 20 ist die genaue Erkennung der Lage der Kante der Materialbahn B von Bedeutung, beispielsweise um die Randbehandlungseinrichtung 20 entsprechend positionieren zu können.

In Figur 2 ist beispielhaft in perspektivischer Ansicht schematisch der Eingangsbereich der Querreckanlage 18 in den Ofen 26 gezeigt.

Die Querreckanlage 18 weist zwei Führungsvorrichtungen 29 auf, die beabstandet zueinander sind, und die jeweils eine Kante der Materialbahn B greifen und führen können.

Jede der Führungsvorrichtungen 29 ist durch eine Bewegungsvorrichtung 30 lateral bewegbar, d.h. auf die gegenüberliegende Führungsvorrichtung 29 hin oder von dieser weg.

Jede der Führungsvorrichtungen 29 weist zudem einen Kantensensor 32 auf, mittels dem die Lage der Kante der Materialbahn B erkannt werden kann. Das Signal des Kantensensors 32, d.h. die Lage der Kante der Materialbahn B, dient als Regelungsgröße für die Verstellung der Führungsvorrichtung 29 mittels der Bewegungsvorrichtung 30.

Die gezeigten Kantensensoren 28 weisen einen Messkopf 32, eine Druckluftquelle 34 sowie einen Drucksensor 36 auf.

Jeder der Kantensensoren 28 hat zumindest einen Messkopf 32 und einen Drucksensor 36.

Es ist denkbar, dass mehrere Kantensensoren 28 eine gemeinsame Druckluftquelle 34 haben.

Die Druckluftquelle 34 ist mittels Leitungen, beispielsweise Rohren und/oder Schläuchen, mit dem Messkopf 32 verbunden. Der Messkopf 32 ist wiederum über Leitungen mit dem Drucksensor 36 fluidisch verbunden.

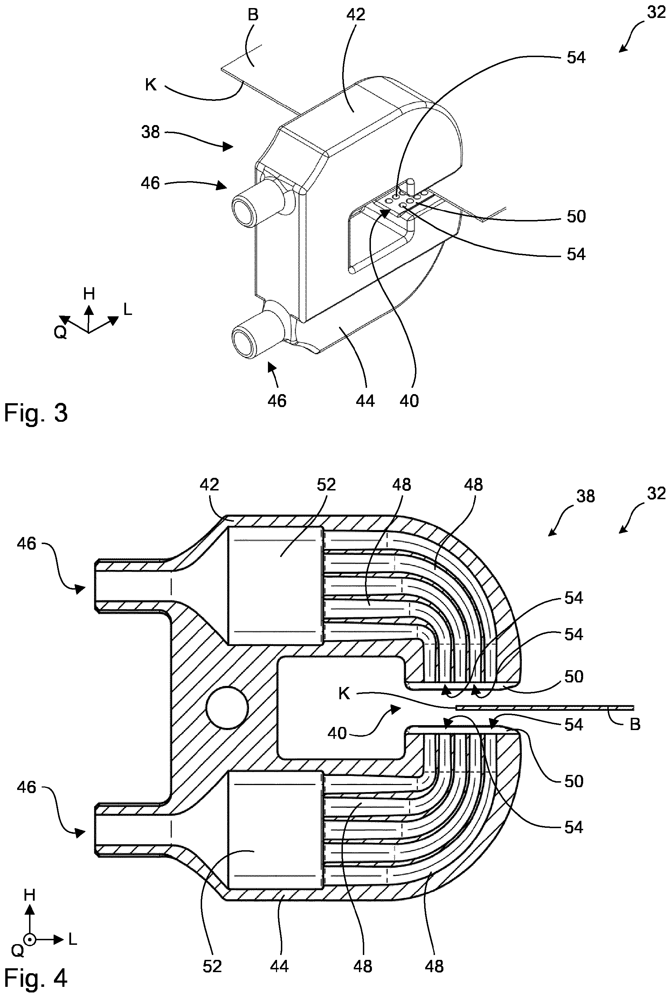

Der Messkopf 32 ist in Figur 3 schematisch dargestellt und in Figur 4 in einer Schnittansicht dargestellt, wobei der Schnitt durch eine Reihe von Öffnungen verläuft.

Der Messkopf 32 hat ein Kopfteil 38 sowie eine Messzone 40, die durch das Kopfteil 38 definiert wird.

Das Kopfteil 38 weist einen ersten Abschnitt 42 und einen zweiten Abschnitt 44 auf, insbesondere besteht das Kopfteil 38 aus dem ersten Abschnitt 42 und dem zweiten Abschnitt 44.

Im gezeigten Ausführungsbeispiel sind der erste Abschnitt 42 und der zweite Abschnitt 44 zusammen einstückig ausgeführt, sodass der gesamte Messkopf 32 einstückig ist.

Das Kopfteil 38 und somit der erste Abschnitt 42 und der zweite Abschnitt 44 sind beispielsweise aus einem Kunststoff und zum Beispiel mittels eines additiven Fertigungsverfahrens, wie 3D-Druck hergestellt. Zur Herstellung mittels 3D-Druck eignet sich zum Beispiel Polyamid 12 (PA12) als Material und/oder Multi Jet Fusion als Herstellungsverfahren.

Denkbar ist auch der Einsatz von Polyetheretherketon (PEEK), Polyetherketonketon (PEKK), Aluminium oder Stahl für die Herstellung des Kopfteils 38 mittels 3D-Druck. Auch andere Materialien, die bei Temperaturen über 80°C formbeständig sind, können verwendet werden.

Ebenso ist die Verwendung von Stereolithografieverfahren (SLA) oder selektivem Lasersintern (SLS) zur Herstellung des Kopfteils 38 denkbar.

Ebenfalls kann das Kopfteil ein Gussteil aus Kunststoff oder Metall sein, d.h. mittels eines Gussverfahrens hergestellt sein.

Denkbar ist auch, dass der erste Abschnitt 42 und der zweite Abschnitt 44 getrennte Teile sind, die zur Herstellung des Kopfteils 38 gegeneinander fixiert sind.

Der Messkopf 32 weist eine Längsrichtung L, eine Querrichtung Q sowie eine Hochrichtung H auf. Die Materialbahn B erstreckt sich in Längsrichtung L sowie in Querrichtung Q, wobei sich die Materialbahn B in Querrichtung Q bewegt. Entsprechend verläuft die Kante K der Materialbahn B ebenfalls in Querrichtung Q.

Der erste Abschnitt 42 und der zweite Abschnitt 44 sind übereinander in Bezug auf die Hochrichtung H angeordnet.

Beispielsweise hat das Kopfteil 38 eine C-Form, in einer Ansicht in Querrichtung Q auf die Seite des Kopfteils 38.

Sowohl der erste Abschnitt 42 als auch der zweite Abschnitt 44 weisen jeweils einen Fluidanschluss 46, eine Vielzahl von Kanälen 48, eine Messfläche 50 sowie optional eine Übergangskavität 52 auf.

Die Fluidanschlüsse 46 sind in Bezug auf die Längsrichtung L auf der von der Materialbahn B abgewandten Seite des Kopfteils 38 angeordnet. Die Öffnungsrichtung der Fluidanschlüsse 46 ist ebenfalls in Längsrichtung L. Denkbar ist jedoch auch, dass sich die Öffnungsrichtung der Fluidanschlüsse 46 in Querrichtung Q oder in Hochrichtung H erstreckt. Denkbar ist ebenfalls, dass sich die Öffnungsrichtung nicht ausschließlich in Längsrichtung L, d.h. zusätzlich auch in Querrichtung Q und/oder in Hochrichtung H erstreckt.

Die Öffnungsrichtungen der Fluidanschlüsse 46 erstrecken sich parallel zueinander.

Denkbar ist ebenfalls, dass sich die Öffnungsrichtungen der Fluidanschlüsse 46 nicht parallel zueinander erstrecken.

An dem der Materialbahn B zugewandten Ende des Kopfteils 38 weisen der erste Abschnitt 42 und der zweite Abschnitt 44 jeweils die eine Messfläche 50 auf.

Die Messflächen 50 weisen jeweils eine Vielzahl an Öffnungen 54 auf.

Im gezeigten Ausführungsbeispiel erstrecken sich die Messflächen 50 des ersten Abschnitts 42 und des zweiten Abschnitts 44 parallel zueinander und parallel zur Materialbahn B, d.h. in Querrichtung Q und in Längsrichtung L.

Die Messflächen 50 sind beispielsweise eben. Im gezeigten Ausführungsbeispiel sind sie nur an einer Seite des jeweiligen Abschnitts 42, 44 angeordnet und erstrecken sich somit nicht an verschiedenen Seiten.

Die Messflächen 50 liegen im gezeigten Ausführungsbeispiel einander gegenüber und sind in Hochrichtung H voneinander beabstandet. Zwischen den beiden Messflächen 50 ist die Messzone 40 ausgebildet, die in Hochrichtung H durch die Messflächen 50 begrenzt wird.

Die Messzone 40 ist in Längsrichtung L und in Querrichtung Q offen. In diesen Richtungen wird sie durch die Dimension der Messflächen 50 in Längsrichtung L und Querrichtung Q festgelegt, insbesondere der Ausdehnung des Bereiches der Messflächen 50, die die Öffnungen 54 aufweisen.

Die Öffnungen 54 sind in den Messflächen 50 vorgesehen, wobei jede Messfläche 50 genauso viele Öffnungen 54 wie Kanäle 48 im jeweiligen Abschnitt 42, 44 aufweist.

Die Öffnungen 54 haben eine Öffnungsrichtung, die insbesondere senkrecht zur Messfläche 50 ist, im gezeigten Ausführungsbeispiel somit in Hochrichtung H verläuft.

Wie in Figur 3 zu erkennen, sind die Öffnungen 54 jeder Messfläche 50 in Reihen aus mehreren Öffnungen 54 angeordnet, die sich in Längsrichtung L erstrecken. Im gezeigten Ausführungsbeispiel sind jeweils fünf Öffnungen 54 in einer Reihe vorgesehen.

In Querrichtung Q sind mehrere Reihen hintereinander angeordnet, im gezeigten Ausführungsbeispiel sind es zwei Reihen an Öffnungen 54.

Im gezeigten Ausführungsbeispiel hat somit jede Messfläche 50 je zehn Öffnungen 54, die in einem regelmäßigen Gitter angeordnet sind. Die Öffnungen 54 sind somit nebeneinander angeordnet.

Denkbar ist auch, dass die Öffnungen 54 benachbarter Reihen in Längsrichtung L versetzt sind. Der Versatz kann dabei die Hälfte des Abstandes (Mittelpunkt zu Mittelpunkt) zwischen zwei Öffnungen 54 einer Reihe betragen.

Wie aus Figur 4 ersichtlich ist, hat jede der Öffnungen 54 der Messfläche 50 des ersten Abschnittes 42 eine ihr entsprechende Öffnung 54 der Messfläche 50 des zweiten Abschnitts 44.

Die einander entsprechenden Öffnungen 54 des ersten und zweiten Abschnitts 42, 44 fluchten miteinander.

Die Öffnungen 54 und damit die Messzone 40 stehen mit den Fluidanschlüssen 46 des ersten und zweiten Abschnitts 42, 44 fluidischer Verbindung.

Die fluidische Verbindung erfolgt mittels der Übergangskavität 52 und der Kanäle 48.

Der Fluidanschluss 46 bzw. die Öffnung des Fluidanschlusses 46 mündet in die Übergangskavität 52.

Die Übergangskavität 52 ist ein Hohlraum innerhalb des ersten Abschnitts 42 bzw. des zweiten Abschnitts 44.

Von der Übergangskavität 52 jeder der Abschnitte 42, 44 gehen jeweils die Kanäle 48 des entsprechenden Abschnitts 42, 44 aus. Beispielsweise gehen die Kanäle 48 von der dem Fluidanschluss 46 entgegengesetzten Seite der Übergangskavität 52 aus.

Die Kanäle 48 münden in die Öffnungen 54 des jeweiligen Abschnitts 42, 44, wobei je einer der Kanäle 48 in je eine der Öffnungen 54 mündet.

Ausgehend von der Übergangskavität 52 verlaufen die Kanäle 48 zunächst parallel zueinander in Längsrichtung L und anschließend in einem Bogen zur Messfläche 50 hin.

In Ausführungsvarianten, in denen die Messfläche 50 bzw. die Öffnungen 54 in Hochrichtung H liegen, verlaufen die Kanäle 48 insbesondere ohne Bogen.

Im gezeigten Ausführungsbeispiel erstreckt sich der Bogen über einen Winkel von 90°, wobei auch ein Winkel zwischen 80° und 100° denkbar ist, entsprechend der Messfläche 50.

Im Bereich von den Öffnungen 54 verlaufen die Kanäle 48 parallel zueinander. Die Bögen der Kanäle 48 innerhalb einer der Abschnitte 42, 44 haben somit unterschiedliche Krümmungsradien.

Die Länge der Kanäle 48 ist größer als das Dreifache der Öffnungsweite einer der Öffnungen 54. Alternativ oder zusätzlich ist die Länge der Kanäle 48 größer als 5 mm, insbesondere größer als 10 mm.

Die Kanäle 48 können sich zu den Öffnungen 54 hin verjüngen. Beispielsweise haben die Öffnungen 54 an der Mündung zur Übergangskavität 52 eine größere Öffnungsweite als an der Mündung zu den Öffnungen 54.

Auf diese Weise wird eine fluidische Verbindung vom Fluidanschluss 46 des ersten Abschnitts 42 mit der Messzone 40 vollständig innerhalb des ersten Abschnitts 42 bereitgestellt. Die fluidische Verbindung besteht dabei beispielsweise aus der Übergangskavität 52 und den Kanälen 48.

In gleicher Weise wird eine fluidische Verbindung vom Fluidanschluss 46 des zweiten Abschnitts 44 mit der Messzone 40 bereitgestellt, die vollständig innerhalb des zweiten Abschnitts 44 verläuft. Beispielsweise besteht die fluidische Verbindung aus der Übergangskavität 52 und den Kanälen 48 des zweiten Abschnitts 44.

Zur Messung bzw. der Detektion einer Kante K der Materialbahn B wird der Messkopf 32 mittels der Leitung fluidisch mit der Druckluftquelle 34 und dem Drucksensor 36 verbunden, beispielsweise mittels der Leitungen.

Beispielsweise wird der Fluidanschluss 46 des ersten Abschnitts 42 mit der Druckluftquelle 34 mittels einer Leitung fluidisch verbunden und der Fluidanschluss 46 des zweiten Abschnitts 44 wird fluidisch mit dem Drucksensor 36 mittels einer Leitung verbunden.

Auf diese Weise kann Druckluft durch den ersten Abschnitt 42 in die Messzone 40 eingebracht werden und durch den zweiten Abschnitt 44 kann der Drucksensor 36 den Druck an der Messfläche 50 des zweiten Abschnitts 44 ermitteln.

Denkbar ist auch, dass der Fluidanschluss 46 des zweiten Abschnitts 44 mit der Druckluftquelle 34 und der Fluidanschluss 46 des ersten Abschnitts 42 mit dem Drucksensor 36 fluidisch verbunden ist.

Für die Messung bzw. der Detektion einer Kante K der Materialbahn B wird nun die Materialbahn B, insbesondere mit ihrer Kante K, durch die Messzone 40 geführt.

Die Materialbahn B verdeckt dabei einige der Öffnungen 54, sodass die Druckluft, die aus den Öffnungen 54 des zweiten Abschnitts 44 (oder des ersten Abschnitts 42) strömt nicht zu den entsprechenden Öffnungen 54 in der Messfläche 50 des zweiten Abschnitts 44 (bzw. des ersten Abschnitts 42) gelangt.

Der vom Drucksensor 36 ermittelte Druck ist somit geringer, als dies der Fall wäre, wenn die Materialbahn B sich nicht in der Messzone 40 befinden würde, wobei der Druck umso geringer ist, je weiter sich die Materialbahn B in der Messzone 40 befindet.

Anhand des gemessenen Drucks kann nun auf die Lage der Kante K innerhalb der Messzone 40 geschlossen werden, wobei der Druck niedriger ist, je weiter die Materialbahn B in der Messzone 40 in der Querrichtung Q verläuft.

Durch die Verwendung der Kanäle 48 wird ein besonders präziser Messkopf 32 und somit ein präziser Kantensensor 28 bereitgestellt. Durch die Verwendung der Kanäle 48 wird eine gleichmäßige Luftströmung durch die Messzone 40 erzeugt, wodurch ein größerer nutzbarer Messbereich sowie eine bessere Linearität erzielt wird. Dies wird dadurch verbessert, dass sich die Kanäle 48 bzw. die darin geführten Strömungen an den Öffnungen 54 nicht gegenseitig beeinflussen können.

## Patentansprüche

1. Messkopf für einen pneumatischen Kantensensor (28) zur Erkennung der Lage einer Kante (K) einer Materialbahn (B), insbesondere einer Folienbahn, mit einem Kopfteil (38) und einer Messzone (40),
wobei das Kopfteil (38) einen ersten Abschnitt (42) und einen zweiten Abschnitt (44) aufweist, wobei die Messzone (40) zwischen dem ersten Abschnitt (42) und dem zweiten Abschnitt (44) angeordnet ist,
wobei sowohl der erste Abschnitt (42) als auch der zweite Abschnitt (44) einen Fluidanschluss (46), eine Vielzahl von Kanälen (48) und eine Messfläche (50) mit Öffnungen (54) aufweist,
wobei die Messflächen (50) des ersten Abschnitts (42) und des zweiten Abschnitts (44) die Messzone (40) begrenzen,
wobei die Messzone (40) mit dem Fluidanschluss (46) des ersten Abschnitts (42) mittels einer fluidischen Verbindung durch den ersten Abschnitt (42) verbunden ist, wobei die fluidische Verbindung zumindest teilweise durch die Öffnungen (54) und die Kanäle (48) des ersten Abschnitts (42) realisiert ist, und
wobei die Messzone (40) mit dem Fluidanschluss (46) des zweiten Abschnitts (44) mittels einer fluidischen Verbindung durch den zweiten Abschnitt (44) verbunden ist, wobei die fluidische Verbindung zumindest teilweise durch die Öffnungen (54) und Kanäle (48) des zweiten Abschnitts (42) realisiert ist.

2. Messkopf nach Anspruch 1, **dadurch gekennzeichnet, dass** jeder der Kanäle (48) in je einer der Öffnungen (54) der Messfläche (50) des entsprechenden Abschnitts (42, 44) mündet, insbesondere wobei sich die Kanäle (48) zu den Öffnungen (54) hin verjüngen.

3. Messkopf nach Anspruch 1 oder 2, **dadurch gekennzeichnet, dass** die Kanäle (48) zumindest teilweise in einem Bogen verlaufen, insbesondere der sich über einen Winkel zwischen 80° und 100°, insbesondere über 90° erstreckt.

4. Messkopf nach einem der vorhergehenden Ansprüche, **dadurch gekennzeichnet, dass** die Kanäle (48) eine Länge von mehr als 5 mm, insbesondere von mehr als 10 mm aufweisen, und/oder eine Länge aufweisen, die größer als die dreifache Öffnungsweite einer der Öffnungen (54) ist.

5. Messkopf nach einem der vorhergehenden Ansprüche, **dadurch gekennzeichnet, dass** die Öffnungsrichtung des Fluidanschlusses (46) des ersten Abschnitts (42) und/oder des zweiten Abschnitts (44) gewinkelt, insbesondere senkrecht zur Öffnungsrichtung der Öffnungen (54) der Messfläche (50) des ersten Abschnitts (42) und/oder des zweiten Abschnitts (44) ist.

6. Messkopf nach einem der vorhergehenden Ansprüche, **dadurch gekennzeichnet, dass** die Messflächen (50) des ersten Abschnitts (42) und des zweiten Abschnitts (44) einander gegenüberliegen, insbesondere parallel zueinander sind.

7. Messkopf nach einem der vorhergehenden Ansprüche, **dadurch gekennzeichnet, dass** die Messfläche (50) eben ist und/oder nur an einer Seite des entsprechenden Abschnitts (42, 44) vorgesehen ist.

8. Messkopf nach einem der vorhergehenden Ansprüche, **dadurch gekennzeichnet, dass** die Messflächen (50) des ersten Abschnitts (42) und des zweiten Abschnitts (44) in Hochrichtung (H) des Messkopfes (32) voneinander beabstandet sind, wobei die Öffnungen (54) der Messfläche (50) des ersten Abschnitts (42) und/oder der Messfläche (50) des zweiten Abschnitts (44) in Längsrichtung (L) und/oder in Querrichtung (Q) nebeneinander angeordnet sind.

9. Messkopf nach einem der vorhergehenden Ansprüche, **dadurch gekennzeichnet, dass** die Öffnungen (54) der Messfläche (50) des ersten Abschnitts (42) und/oder der Messfläche (50) des zweiten Abschnitts (44) in wenigstens einer Reihe angeordnet sind, die sich insbesondere in Längsrichtung (L) erstreckt.

10. Messkopf nach Anspruch 9, **dadurch gekennzeichnet, dass** wenigstens zwei Reihen von Öffnungen (54) vorgesehen sind, die in Querrichtung (Q) nebeneinander angeordnet sind, insbesondere wobei die Öffnungen (54) ein regelmäßiges Gitter bilden.

11. Messkopf nach einem der vorhergehenden Ansprüche, **dadurch gekennzeichnet, dass** die Öffnungen (54) der Messfläche (50) des ersten Abschnitts (42) und die gegenüberliegende Öffnung (54) der Messfläche (50) des zweiten Abschnitts (44) miteinander fluchten.

12. Messkopf nach einem der vorhergehenden Ansprüche, **dadurch gekennzeichnet, dass** der erste Abschnitt (42) und der zweite Abschnitt (44) zusammen einstückig ausgeführt sind, insbesondere wobei der gesamte Messkopf (32) einstückig ist.

13. Messkopf nach einem der vorhergehenden Ansprüche, **dadurch gekennzeichnet, dass** im ersten Abschnitt (42) und/oder im zweiten Abschnitt (44) eine Übergangskavität (52) angeordnet ist, in der der Fluidanschluss (46) und die Kanäle (48) des jeweiligen Abschnitts (42, 44) münden, insbesondere wobei der Fluidanschluss (46) und die Kanäle (48) an entgegengesetzten Seiten in die Übergangskavität (52) münden.

14. Kantensensor zur Erkennung der Lage einer Kante (K) einer Materialbahn (B), insbesondere einer Folienbahn, mit einem Messkopf (32) nach einem der vorhergehenden Ansprüche, einer Druckluftquelle (34) und einem Drucksensor (36),
wobei die Druckluftquelle (34) und der Drucksensor (36) mit verschiedenen der Fluidanschlüsse (46) des Messkopfes (32) fluidisch verbunden sind.

15. Anlage zur Herstellung einer Materialbahn (B), insbesondere Folienherstellungsanlage, mit einem Kantensensor (28) nach Anspruch 14, insbesondere wobei sich die Materialbahn (B) durch die Messzone (40) erstreckt.
